Europäisches Patentamt

European Patent Office

Office européen des brevets

(11) Publication number: **0 120 605**
**B1**

# EUROPEAN PATENT SPECIFICATION

(45) Date of publication of patent specification: **13.01.88**

(51) Int. Cl.⁴: **G 01 N 27/12**

(21) Application number: **84301211.3**

(22) Date of filing: **24.02.84**

(54) Gas detecting apparatus.

(30) Priority: **29.03.83 JP 51680/83**
**11.04.83 JP 62075/83**
**28.06.83 JP 98726/83 u**
**28.09.83 JP 178216/83**
**15.11.83 JP 213347/83**
**21.11.83 JP 217843/83**

(43) Date of publication of application:
**03.10.84 Bulletin 84/40**

(45) Publication of the grant of the patent:
**13.01.88 Bulletin 88/02**

(84) Designated Contracting States:
**DE FR GB**

(56) References cited:
**EP-A-0 038 078**
**EP-A-0 115 182**
**DE-B-2 005 497**
**GB-A-1 477 082**
**US-A-3 865 550**
**US-A-3 932 807**

(73) Proprietor: **NEW COSMOS ELECTRIC CO., LTD.**
**2-5-4, Mitsuya-naka Yodogawa-ku**
**Osaka-shi Osaka-fu (JP)**

(72) Inventor: **Igarashi, Ario**
**15-24, Daito-cho**
**Ashiya-shi Hyogo-ken (JP)**
Inventor: **Kitaguchi, Hisao**
**102, 40-go 60-ban, 3-chome**
**Chokoji-minami Toyonaka-shi Osaka-fu (JP)**
Inventor: **Kaino, Hiroshi**
**25-8, 1-chome Mitsuya-kuta**
**Yodogawa-ku Osaka-shi Osaka-fu (JP)**
Inventor: **Sakai, Sai**
**24-10002, 13-ban, 1-chome Niitaka**
**Yodogawa-ku Osaka-shi Osaka-fu (JP)**

(74) Representative: **Allam, Peter Clerk et al**
**LLOYD WISE, TREGEAR & CO. Norman House**
**105-109 Strand**
**London WC2R 0AE (GB)**

Courier Press, Leamington Spa, England.

**0 120 605**

**Description**

This invention relates to a gas detecting apparatus comprising a gas sensor which includes a semiconductor placed in contact with a heating wire.

Varied gas sensors have been proposed for detecting gases. There are two types that have been in wide use, and they are the catalytic oxidation type and the semiconductor type. The former comprises a platinum coil and a sintered piece of powdery particles formed thereon to act as catalyst (see for example EP—A—0038078). When its catalytically active surface (which is maintained at about 300°C) comes into contact with air containing a combustible gas, the gas and oxygen react with each other even at a concentration below a lower explosion limit. A heat resulting from the reaction raises the temperature of the platinum coil and increases its resistance. The resistance variation is measured by a bridge circuit or other means, whereupon a gas detection signal is given. With this catalytic oxidation type gas sensor, there is a linear relationship between an output signal and a gas concentration, but this gas sensor is inferior to the semiconductor type gas sensor in long-term stability of gas sensitivity.

On the other hand, the semiconductor type gas sensor comprises a sintered piece of metal oxide such as tin oxide, zinc oxide or the like formed between a pair of electrodes (see for example DE—B—2 005 497). One of the electrodes extends in coil and is connected to the other electrode to be used also as a heating electrode usually. The sensor is maintained at a temperature of 300—400°C by this heater electrode. Presence of a gas is detected by utilizing a decrease in the resistance between the two electrodes which takes place as the electric conductivity of the semiconductor increases with gas adsorption.

The semiconductor type gas sensor is superior to the catalytic oxidation type sensor in durability and long-term stability and also in resistibility to poisoning. On the other hand, however, the semiconductor type gas sensor consumes greater power and requires a large capacity electric source comprising a transformer, and hence is costly. Further, since its output signal depends largely on voltage, a constant voltage circuit is required in order to achieve satisfactory performance, which adds to high cost. A further disadvantage of the semiconductor type gas sensor is that it has a large thermal capacity and takes a long time before its output signal stabilizes, which results in a long adjustment time required. Thus, the qualities tend to be unstable and also productivity is not satisfactory. Still further, the semiconductor type gas sensor requires a temperature compensating circuit since it depends on temperature and humidity to a great degree.

This invention has been made having regard to the above state of the art. Therefore, the invention intends to provide a gas detecting apparatus comprising a gas sensor including a semiconductor placed in contact with a heating wire, which apparatus is capable of gas detection without consuming great power and with good gas sensitivity lasting over a long period of time.

More particularly, the object of this invention is to provide a gas detecting apparatus wherein a gas sensor comprises a semiconductor of metal oxide placed in close contact with a metallic heating member, and load limiting resistor is connected in series to the gas sensor, the gas sensor being heated by the metallic heating member, and means is provided to detect variations in combined resistance of the metallic heating member and the semiconductor which occur as the semiconductor adsorbs a gas.

In the gas detecting apparatus according to this invention, materials of the metallic heating member and/or the semiconductor are optimized thereby to minimize temperature dependence of the combined resistance whether there occurs gas adsorption or not, and to maximize gas concentration dependence of the combined resistance, namely gas sensitivity, when gas adsorption occurs. It is immaterial whether or not the metallic heating member is formed on a base plate, but the metallic heating member is in a spiral or zigzag form to heat the semiconductor effectively. Further, the load limiting resistor should desirably comprise a material having only negligible resistance variations due to Joule's heat.

The described construction achieves the object of this invention. Details of the apparatus according to this invention will be apparent from the following description to be made with reference to the drawings. In the drawings.

Figure 1 is a circuit diagram showing a gas detecting apparatus according to a first embodiment of this invention;

Figures 2 and 3 are perspective views partly in section each showing an example of gas sensor used with the embodiment of Figure 1;

Figure 4 is a sectional view of a further example of gas sensor;

Figure 5 is a graph showing general relationship between temperature and electric resistance of a metallic heating member and a semiconductor used in the gas sensor;

Figure 6 is a graph showing variations with temperatures in combined resistance of the metallic heating member and the semiconductor in the examples of Figures 2 to 4;

Figure 7 is a graph showing relationship between voltage applied by an electric source to the sensor and output voltage of the sensor with respect to varied gases;

Figures 8 and 9 are graphs showing relationship between materials used for the metallic heating member and properties thereof in relation to electric resistance in a gas sensor according to a further embodiment;

Figure 10 is a section taken on line X—X of Figure 11 showing a gas sensor according to a still further embodiment;

2

Figure 11 is a section taken on line XI—XI of Figure 10;
Figure 12 is a circuit diagram showing an apparatus according to a further embodiment; and
Figures 13 and 14 are graphs showing output signals of the apparatus of Figure 12.

First embodiment

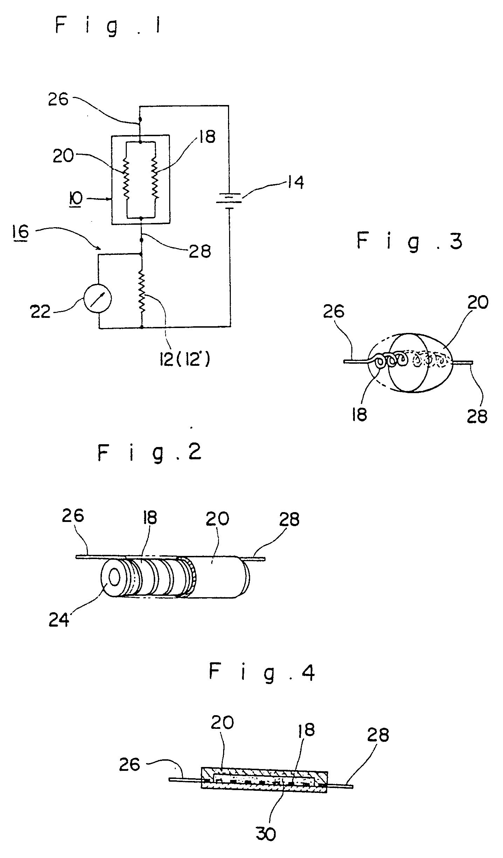

As shown in Figure 1, a gas detecting apparatus according to this embodiment comprises a gas sensor 10, a load limiting resistor 12 connected in series to the gas sensor 10 and having a predetermined resistance R', an electric source 14 for applying a predetermined voltage V to the sensor 10 and the resistor 12, and detecting means 16 to detect variations in a combined resistance R of the gas sensor 10. The gas sensor 10 includes a metallic heating member 18 and a semiconductor 20 of metal oxide connected in parallel with each other, the semiconductor 20 being heated by the metallic heating member 18. The detecting means 16 comprises a voltmeter 22 and the load limiting resistor 12. Thus the resistor 12 is provided to perform two functions, one of which is to optimize an electric current $i$ passing through the sensor 10, and the other, the more important of the two, is to act as resistance for detecting $iR$, namely variations of the combined resistance R by utilizing a relationship V (const.)=i (R+R') and variations of partial voltage $iR'$.

Examples of specific construction of the gas sensor 10 are shown in Figures 2 to 4, any one of which may be employed. In the example of Figure 2, the metallic heating member 18 comprises a platinum film formed by the vapor deposition method on an outer periphery of a heat resisting and electricity insulating tubular or columnar support member 24 and trimmed to be in a helical form and have a predetermined resistance. The metallic heating member 18 is peripherally contacted and covered by the semiconductor 20 having sensitivity to gases and comprising a metal oxide such as tin oxide. Numbers 26 and 28 denote lead wires connected to ends of the metallic heating member 18 and the semiconductor 20.

In the example of Figure 3, there is no support member but a coiled metallic heating member 18 is covered by a gas sensitive semiconductor 20 in spheroid form. In the example of Figure 4 the metallic heating member 18 and the semiconductor 20 are in contact with each other at both ends thereof, with an intermediate portion electrically insulated by an insulator 30. Components in Figures 2 to 4 are formed of the same materials, respectively.

This embodiment including the examples of Figures 2—4 has a feature far more important than the described specific constructions, and this important feature resides in that the metallic heating member has an appropriate positive temperature coefficient of electric resistance and the semiconductor of metal oxide has an appropriate "negative temperature coefficient of electric resistance", materials being selected for the metallic heating member and the semiconductor such that the two temperature coefficients offset each other. (For convenience sake, the term "negative temperature coefficient of resistance" is used although the resistance of the semiconductor does not change in proportion to temperature.)

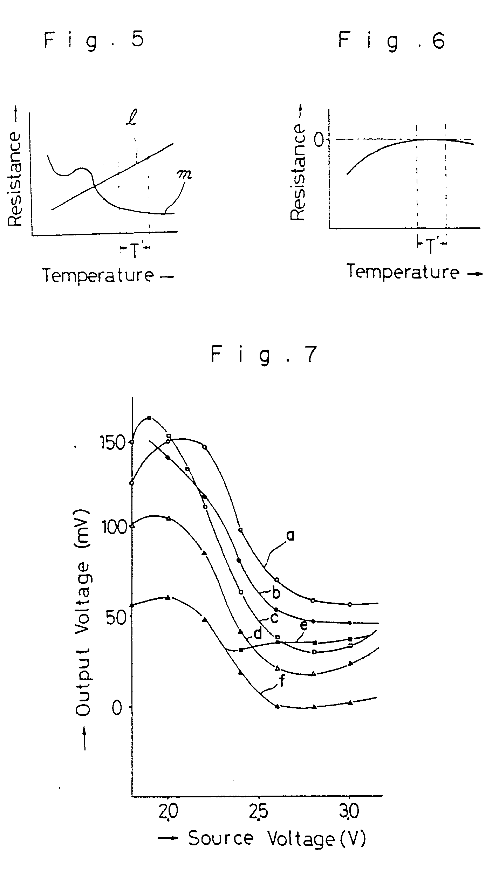

This feature is hereinafter described referring to Figures 5 to 7. A resistance $R_A$ of the metallic heating member 18, a resistance $R_B$ of the semiconductor 20 connected in parallel to the member 18, and combined resistance R thereof are derived, by a simple simulation utilizing acceptable models, from the following equations:

$$R_A=R_{AO}(1+ATc) \tag{i}$$

$$R_B=R_{BO} \cdot e^{+\dfrac{B}{Tk}} \tag{ii}$$

$$R=\dfrac{R_A \cdot R_B}{R_A+R_B} \tag{iii}$$

wherein $R_{AO}$, $A$, $R_{BO}$ and $B$ are numerical values characteristic of types of materials, respectively, Tc is temperature by centigrade (°C) and Tk is absolute temperature (°K).

The equation (i) is represented by a straight line (I) and the equation (ii) by a curve (m) in Figure 5, the positional relationship between the line (I) and the curve (m) being schematically shown. The equation (iii) is represented by a curve in Figure 6. In a range indicated by reference T' in Figures 5 and 6, the line (I) and the curve (m) have about the same degree of inclination but incline in opposite directions, while the combined resistance R is substantially constant as seen in Figure 6. The sensor, if used in this range, gives a highly reliable gas detection signal.

In this embodiment materials are selected for the metallic heating member 18 and/or the semiconductor 20 so as to extend the range T' to a maximum. In particular, antimony pentoxide ($Sb_2O_5$) is added in an optimal proportion to the tin oxide ($SnO_2$) forming the semiconductor 20. Figure 7 clearly shows an effect produced thereby. This figure shows output voltage variations of the gas sensor 10 when detecting varied gases, which are measured while varying the voltage applied by the electric source to the gas sensor 10 to vary the sensor temperature. Curves $a$ to $e$ represent data resulting from detection of hydrogen gas, a gas mixture of carbon monoxide and hydrogen in a 2:1 ratio, ethanol, carbon monoxide

3

# 0 120 605

and methane, all contained in air in a concentration of 100 ppm, respectively. Curve *f* represents data resulting from the case of clean air. As seen, the sensor output signal is stable when the output voltage of the electric source is in a range of about 2.6V to about 3.0V.

Second embodiment

In the first embodiment described above, the temperature coefficient of electric resistance of the semiconductor is regulated whereas in the second embodiment the temperature coefficient of electric resistance of the metallic heating member of the sensor is regulated. The two embodiments are the same in the other respects.

The foregoing equation (i) is modified into the following equation (i′):

$$R'_A = Rc \ (1 + a\Delta T) \tag{i′}$$

wherein Rc is a resistance $\Omega$ at a certain given temperature (°C), and $R'_A$ is a resistance $\Omega$ when the given temperature is raised by $\Delta T$ (°C).

However, where the given temperature is 0°C, the equation (i′) is in agreement with the equation (i), and the coefficient $a$ is equal to the coefficient *A* which is the temperature coefficient of electric resistance. Where the metallic heating member of the gas sensor comprises pure platinum, the absolute value of the coefficient $a$ in the temperature range in which the gas sensor is used is greater than the absolute value of apparent coefficient of the semiconductor, as seen in Figure 5. The coefficient $a$ in the case of pure platinum is about $3.9 \times 10^{-3}$/°C. The present inventors prepared varied alloys by adding to platinum some noble metals such as rhodium and iridium and base metals such as nickel, and obtained results as shown in Table 1 below.

TABLE 1

| | | 5% | 10% | 20% | 30% | 40% |
|---|---|---|---|---|---|---|
| 1 | Pt-Rhx | 2.6 | 1.7 | 1.4 | 1.3 | 1.3 |
| 2 | Pt-Irx | 1.5 | 1.3 | 0.8 | — | 0.7 |
| 3 | Pt-Nix | 2.4 | 1.4 | 0.8 | — | — |
| 4 | Pt-Pdx | 1.6 | 1.3 | 1.1 | 1.0 | 0.9 |
| 5 | Pt-Agx | 0.8 | 0.4 | — | — | — |
| 6 | Pd-Aux | — | 2.2 | 1.8 | 1.4 | — |
| 7 | Pd-Agx | — | 1.3 | 0.7 | 0.3 | — |
| 8 | Pd-Ir18 | — | — | 0.61 | — | — |

As seen in the above table, when any one of rhodium, iridium, nickel, palladium and silver is added to platinum, the value of $a$ reduces in inverse proportion to the amount added. An alloy comprising palladium as the main component also provides a smaller $a$ value than pure platinum.

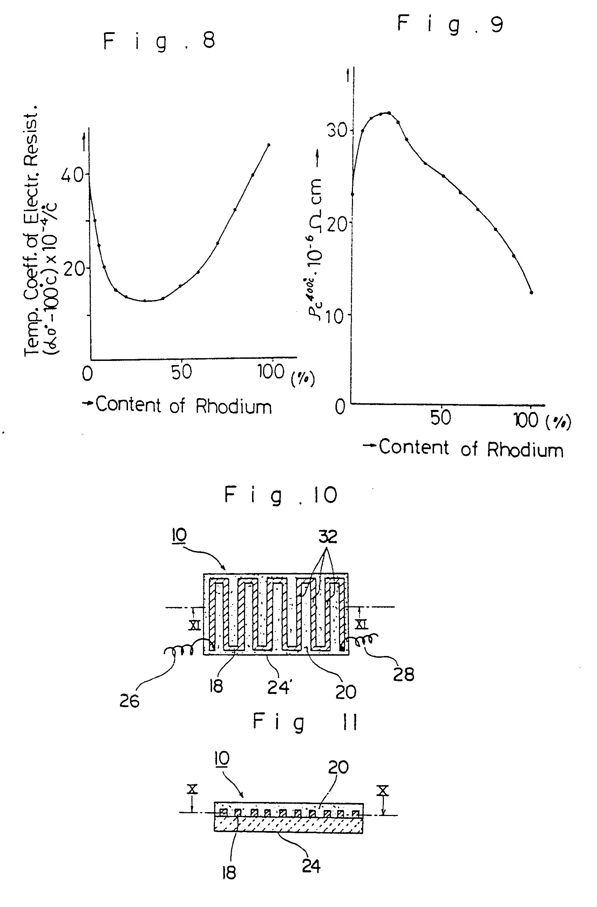

Figure 8 is a graph showing a relationship between the $a$ values and amounts (%) of rhodium added, as an example, to platinum. As seen in the graph, satisfactory $a$ values, 0.55—0.50 times or less (i.e. about 1/2 or less) the case of pure platinum, are obtainable when rhodium is added in a range of 5—70 percent. However, an addition of rhodium in excess of 30 percent renders the alloy less workable, and therefore an optimal amount to be added is in a range of 5—30 percent.

Further, an alloy comprising platinum as a main component is better than an alloy having palladium as the main component from the point of view of workability and resistibility to corrosion.

Such alloys are preferable to pure platinum for other reasons too. As seen in Figure 9, these alloys comprising components in the above ratio have, at 400°C, a specific resistance $\rho c$ 400°C of about $30 \times 10^{-6} \ \Omega$ cm which is about 1.3 times the value, about $23 \times 10^{-6} \ \Omega$ cm, of platinum. Therefore $R_A$ and $R_B$ slightly approach each other in the equation (iii), which increases the ratio of change in the combined resistance $R$ with respect to the change in the resistance $R_B$ of the semiconductor due to gas adsorption. In other words, it increases the gas sensitivity of this sensor. It is an extremely advantageous fact in view of difficulties in lowering $R_B$ relative to $R_A$ by modifying the material of said semiconductor.

Third embodiment

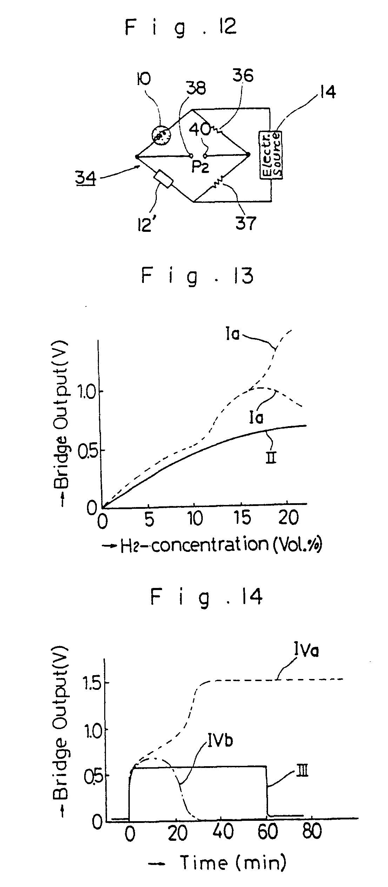

From the point of view of an overall construction, the third embodiment shown in Figures 10 and 11 is

4

based on the same principle as are the first and second embodiments. As regards the gas sensor which is a main component of the overall construction, it should be noted that the material for the semiconductor of metal oxide such as tin oxide and/or the material for the metallic heating member which constitute the gas sensor are also prepared according to the same principle as in the cases of the first and second embodiments.

Furthermore, this third embodiment has the basic and important features of the apparatus according to this invention that the gas sensor includes the metallic heating member and the semiconductor to be heated thereby are formed close to each other and that two lead wires are sufficient for connecting the metallic heating member and the semiconductor to an electric source to detect combined resistance of the two elements.

The third embodiment, however, is different from the first embodiment in specific construction of the gas sensor. More particularly, the gas sensor 10 according to the third embodiment has a metallic heating member 18 comprising a film of platinum or of platinum alloy formed in a zigzag pattern on a heat resisting and electricity insulating base plate 24'. The zigzag pattern herein, preferably, is a continuation of U-shape portions and inverted U-shape portions arranged alternately as shown in Figure 10, but this embodiment is by no means restricted to such a pattern. It will be apparent that the pattern may, for example, be formed by interconnecting legs of V-shape portions.

The metallic heating member comprises a plurality of courses 32 as shown in Figure 10. The semiconductor 20 comprising tin oxide, zinc oxide or the like and placed in close contact with the metallic heating member so as to cover an entire length thereof also lies between an adjacent pair of courses 32 as seen in Figure 11.

Needless to say, according to the construction of Figures 10 and 11, the metallic heating member 18 is in contact with the semiconductor 20 over very large areas so that the former heats the latter and the base plate 24' effectively, thereby maintaining the whole sensor at a predetermined temperature easily and accurately. However, this embodiment has a more important function and advantage than the foregoing, as follows:

When in use, an electric current flows from one point in one of the courses 32 of the metallic heating member to another point in an adjacent one of the courses 32 across a semiconductor portion lying between the two points. In other words, this gas sensor realizes a multiplicity of electric shunts therein, and this feature provides the gas sensor according to this embodiment with an extremely good gas sensitivity.

Fourth embodiment

This embodiment is an improvement on the preceding gas detecting apparatus, which is particularly suited to detection of a high concentration gas. And in particular this embodiment relates to the nature of load limiting resistor.

Referring to Figure 12, if the load limiting resistor 12' is the type having resistance greatly variable by Joule's heat, such as what is called a temperature compensating element, the following inconvenience will arise: When the gas sensor 10 connected in series to the resistor 12' adsorbs a high concentration gas, the resistance decreases sharply. As a result the voltage acting on the resistor 12' increases and so does Joule's heat. The increased Joule's heat in turn increases the resistance of the resistor 12' further, and hence a vicious cycle. Thus, this apparatus provides an output signal, namely an output of a bridge circuit 34, varying between curve portions la and lb in Figure 13. In extreme cases the apparatus may provide an output signal as shown by a curve IVa of Figure 14 or an output signal as shown by a curve IVb therein.

The apparatus must provide very stable output signals as represented by curves II and III of Figures 13 and 14, respectively. For this purpose, the load limiting resistor connected in series to the gas sensor has a resistance substantially equal to a resistance of the gas sensor at times of use in the ambient air, and is formed of a material having only negligible resistance variations due to Joule's heat. In particular, the load limiting resistor comprises a film formed by vapor deposition of nichrome, tin oxide, indium oxide or the like.

This gas detecting apparatus comprises the bridge circuit 34 connected to an electric source 14 and including the load limiting resistor 12', the gas sensor 10 and resistors 36 and 37 as shown in Figure 12. Numbers 38 and 40 denote output terminals and $P_2$ represents a bridge output. When the sensor 10 detects a gas, the bridge circuit loses a balance and provides a bridge output $P_2$ corresponding to a gas concentration. For particulars of the performance, the apparatus has been tested in airs containing hydrogen in varied proportions, results of which are shown in Figure 13, and variations with the passage of time in air containing 20 percent hydrogen are checked, results of which are shown in Figure 14.

From Figure 13 it will be seen that the output signal of the above apparatus increases in proportion to an increasing gas concentration. From Figure 14 it will be seen that the bridge output $P_2$ (solid line III) remains stable in the air containing 20 percent hydrogen over a long period of time (0—60 minutes) and quickly returns to a normal value after the gas is removed (after lapse of 60 minutes). Thus, the apparatus is excellent in output signal reproducibility. When its gas concentration detecting precision is likely to deteriorate by catalytic oxidation of hydrogen or other gas on the surface of the sensor 10 due to heat generated by the load limiting resistor 12', an oxidation preventing agent such as Pb, As, Sb, P, Si, S, Cl, Se, Te or the like may be added to the material for forming the semiconductor of the sensor 10.

While the bridge circuit 34 is used as gas detecting circuit in this embodiment as shown, the circuit shown in Figure 1 can be used therefor. In other words, one of the output terminals should be disposed on a standard electric potential point in the circuit whereas the other terminal is to be disposed on a connecting point between the gas sensor and the load limiting resistor. Preferably, the standard electric potential point has an adjustable potential. As noted above, this apparatus is capable of gas detection with good stability and with good reproducibility even in a high concentration range. Further, since no compensation element is required, the apparatus has outstanding advantages of not only low material cost and simple production process but also compactness of the entire apparatus.

### Claims

1. A gas detecting apparatus comprising:
a gas sensor composed of a metallic heating member (18) and a metal oxide semiconductor (20) in contact with the member at least at both ends thereof,
a load limiting resistor (12) connected in series to the gas sensor,
an electric source (14) for applying predetermined voltage to the gas sensor and the load limiting resistor, and
detecting means (16) to detect variations in a combined resistance of the metallic heating member and the metal oxide semiconductor,
characterised in that the metallic heating member (18) is adapted to heat the semiconductor (20) in such a state that adsorption of a gas to the semiconductor (20) results in the variations in said combined resistance,
and in that the metallic heating member (18) has a positive temperature coefficient of electric resistance, and the metal oxide semiconductor (20) has a negative temperature coefficient, the materials of said member (18) and said semiconductor (20) being such that the two temperature coefficients offset each other.

2. A gas detecting apparatus as claimed in Claim 1 characterised in that the metallic heating member (18) comprises a metal having a smaller temperature coefficient of electric resistance than pure platinum.

3. A gas detecting apparatus as claimed in Claim 2 characterised in that the metallic heating member (18) comprises a platinum alloy containing at least one of rhodium, iridium and nickel in a range of 5—30 percent, and has a temperature coefficient of electric resistance half or less than half of that of pure platinum and a specific resistance at least about 1.25 times that of pure platinum.

4. A gas detecting apparatus as claimed in any one of Claims 1 to 3 characterised in that the metallic heating member (18) is formed in a zigzag or like pattern on a base plate (24') having heat resisting and electrically insulating properties.

5. A gas detecting apparatus as claimed in any one of claims 1 to 4 characterised in that the load limiting resistor (12) comprises a material having only negligible resistance variations due to Joule's heat.

### Patentansprüche

1. Vorrichtung zum Nachweis von Gasen, die folgende Teile umfaßt:
einen Gassensor bestehend aus einer metallischen Heizvorrichtung (18) und einem Metalloxidhalbleiter (20), der die Heizvorrichtung an mindestens zwei Enden berührt,
einen Widerstand (12) zur Beschränkung der Last, der in einer Reihenschaltung mit dem Gassensor verbunden ist,
einer Stromquelle (14) zum Anlegen einer vorbestimmten Spannung an den Gassensor und den lastbeschränkenden Widerstand, und
eine Detektorvorrichtung (16) zum Nachweisen von Schwankungen in einem Kombinationswiderstand der metallischen Heizvorrichtung und dem Metalloxidhalbleiter, dadurch gekennzeichnet,
daß die metallische Heizvorrichtung (18) darauf ausgerichtet ist, den Halbleiter (20) derart zu erwärmen, daß durch Adsorption eines Gases an den Halbleiter (20) Schwankungen in dem Kombinationswiderstand auftreten, und daß die metallische Heizvorrichtung (18) einen positiven Temperaturkoeffizienten des elektrischen Widerstands hat und der Metalloxidhalbleiter (20) einen negativen Temperaturkoeffizienten, daß das Material des Glieds (18) und des Halbleiters (20) so gewählt wurde, daß die beiden Temperaturkoeffizienten einander aufheben.

2. Vorrichtung zum Nachweis von Gasen gemäß Anspruch 1, dadurch gekennzeichnet, daß die metallische Heizvorrichtung (18) ein Metall umfaßt, das einen niedrigeren Temperaturkoeffizienten des elektrischen Widerstands hat als reines Platin.

3. Vorrichtung zum Nachweis von Gasen gemäß Anspruch 2, dadurch gekennzeichnet, daß die metallische Heizvorrichtung (18) aus einer Platinlegierung ist, die mindestens eines der Elemente Rhodium, Iridium und Nickel im Bereich von 5 bis 30% enthält, und einen Temperaturkoeffizienten des elektrischen Widerstands aufweist, der nur halb so groß oder weniger als halb so groß wie der von reinem Platin ist und einen 1,25 mal höheren spezifischen Widerstand als reines Platin hat.

4. Vorrichtung zum Nachweis von Gasen gemäß einem der vorhergehenden Ansprüche 1 bis 3, dadurch gekennzeichnet, daß die metallische Heizvorrichtung (18) in einem Zick-Zack-Muster oder

**0 120 605**

dergleichen auf einer Grundplatte (24') angeordnet ist, die wärmebeständig ist und gute Isoliereigenschaften aufweist.

5. Vorrichtung zum Nachweis von Gasen gemäß einem der vorhergehenden Ansprüche 1 bis 4, dadurch gekennzeichnet, daß der lastbeschränkende Widerstand (12) aus einem Material ist, das nur geringste Widerstandsschwankungen aufgrund Joulscher Wärme aufweist.

## Revendications

1. Appareil de détection de gaz, comprenant:
un capteur de gaz composé d'un organe métallique (18) de chauffage et d'un semi-conducteur (20) d'un oxyde métallique, placé au contact de l'organe au moins à ses deux extrémités,
une résistance (12) de limitation de charge montée en série avec le capteur de gaz,
une source électrique (14) destinée à appliquer une tension prédéterminée au capteur de gaz et à la résistance de limitation de charge, et
un dispositif de détection (16) destiné à détecter les variations de la résistance combinée de l'organe métallique de chauffage et du semi-conducteur d'oxyde métallique, caractérisé en ce que l'organe métallique de chauffage (18) est destiné à chauffer le semi-conducteur (20) à un état tel que l'adsorption d'un gaz par le semi-conducteur (20) provoque des variations de la résistance combinée, et
en ce que l'organe métallique de chauffage (18) a un coefficient positif de variation de résistance électrique avec la température, et le semi-conducteur (20) d'oxyde métallique a un coefficient négatif de variation avec la température, les matériaux dudit organe (18) et dudit semi-conducteur (20) étant tels que les deux coefficients de variation avec la température se compensent mutuellement.

2. Appareil de détection de gaz selon la revendication 1, caractérisé en ce que l'organe métallique (18) de chauffage contient un métal ayant un plus faible coefficient de variation de résistance électrique avec la température que le platine pur.

3. Appareil de détection de gaz selon la revendication 2, caractérisé en ce que l'organe métallique de chauffage (18) est un alliage de platine contenant au moins du rhodium, de l'iridium ou du nickel, en quantité comprise entre 5 et 30%, et a un coefficient de variation de résistance électrique avec la température qui est égal à la moitié ou à moins de la moitié de celui du platine pur, et une résistivité au moins égale à 1,25 fois environ celle du platine pur.

4. Appareil de détection de gaz selon l'une quelconque des revendications 1 à 3, caractérisé en ce que l'organe métallique (18) de chauffage est mis sous forme d'un dessin sinueux ou analogue formé sur une plaque de base (24') ayant des propriétés de résistance à la chaleur et d'isolement de l'électricité.

5. Appareil de détection de gaz selon l'une quelconque des revendications 1 à 4, caractérisé en ce que la résistance (12) de limitation de charge est un matériau ayant des variations négligeables seulement de résistance sous l'action de la chaleur dégagée par effet Joule.

7

Fig. 1

Fig. 3

Fig. 2

Fig. 4

Fig. 5

Fig. 6

Fig. 7

Fig. 8

Fig. 9

Temp. Coeff. of Electr. Resist. $(\alpha_0^\prime\text{--}100\text{°C}) \times 10^{-4}/\text{°C}$

40

20

0    50    100 (%)

→ Content of Rhodium

$\rho_c^{400\text{°C}} \cdot 10^{-6} \, \Omega \cdot cm$ →

30

20

10

0    50    100 (%)

→ Content of Rhodium

Fig. 10

10     32

XI      XI

26   18   24   20   28

Fig 11

10    20

X        X

18    24

F i g . 12

F i g . 13

F i g . 14

4